# EUROPEAN PATENT APPLICATION

(11) **EP 4 810 207 A1**
(43) Date of publication of application: **23.09.2026**
(21) Application number: 26156053.6
(22) Date of filing: 03.02.2026
(51) Int. Cl.: B25J 9/16, B66C 13/48

(54) **SYSTEM FOR THE AUTOMATIC OR SEMI-AUTOMATIC MOVEMENT OF AN ARTICULATED ARM, PARTICULARLY AN ARTICULATED CRANE**

(30) Priority: 18.03.2025 IT 202500005505
(71) Applicant: FASSI GRU S.p.A., 24021 Albino, BG (IT); O.ME.FA. S.p.A. Officina Meccanica Fassi, 24021 Albino (BG) (IT); Fondazione Istituto Italiano di Tecnologia, 16163 Genova (GE) (IT); Intellimech Consorzio per la Meccatronica, 24126 Bergamo (BG) (IT)
(72) Inventor: Rucodainii, Alexandr, 24124 Bergamo (BG) (IT); Duz, Alessandra, 26100 Cremona (IT); Birolini, Valentino, 24020 Cene (BG) (IT); Ceresoli, Rossano, 24020 Ranica (BG) (IT); Signori, Roberto, 24021 Albino (BG) (IT); Negrello, Francesca, 24128 Bergamo (BG) (IT); Catalano, Manuel, 56121 Pisa (PI) (IT); Ribolla, Gabriele, 24054 Calcio (BG) (IT); Ierace, Stefano, 25062 Concesio (BS) (IT); Iapichino, Angelo, 24040 Levate (BG) (IT)
(74) Representative: Praxi Intellectual Property Milano

(57) **Abstract**

A system for the automatic or semi-automatic movement of an articulated arm (101) in a workspace comprises:
- said articulated arm (101), comprising an articulated crane comprising a plurality of bodies connected in succession to form an open kinematic chain with an end-effector (105), having a plurality of degrees of translational and/or rotational freedom and a plurality of actuators for the movement of said bodies;
- a plurality of sensors associated with said bodies, suitable to supply signals representative of linear or angular positions such as to allow the determination of coordinates of the end-effector (105) with respect to a fixed first reference system (x, y, z);
- a command device (110) configured for the control of the movements of the articulated arm (101) by an operator;
- a vision system (10), arranged in a predefined position with respect to the first reference system (x, y, z) and capable of acquiring images of the workspace and of determining coordinates of one or more reference points in the workspace with respect to a second reference system (x', y', z'), integral with the vision system (10), wherein said one or more reference points correspond to physical reference elements positioned in the workspace and viewable by the vision system (10), and/or to virtual reference points entered as input parameters in the images of the workspace acquired by the vision system (10) by means of a user interface device (112);
- at least one control unit operatively connected to said actuators, sensors, vision system (10), command device (110) and user interface device (112), configured to:
• determine the coordinates of the one or more reference points in the workspace with respect to the first reference system (x, y, z);
• automatically control the movements of the end-effector (105) or modify the movements of the end-effector (105) controlled by the command device (110) as a function of said coordinates of the one or more reference points in the workspace with respect to the first reference system (x, y, z).

## Description

### Technical field of the invention

The present invention relates to a system for automatic or semi-automatic movement of an articulated arm, particularly an articulated crane. For example, automatic or semi-automatic movement may involve reaching a target position and/or executing a predetermined trajectory and/or moving within the limits of a permitted zone or outside an inhibited zone. An "articulated arm" means a system having a plurality of bodies, connected to each other in succession, such as to form an open kinematic chain with a plurality of degrees of freedom, translational and/or rotational in space.

### Prior art

The movement of articulated cranes typically involves control by an operator, such as via a radio control, of the direction and speed of the crane's end-effector until a desired positioning within a working space is achieved. This movement must be such as to avoid possible collisions or crane tipping, or, in general, dangerous situations. This activity requires a high level of operator qualification and, in any case, a prolonged and high level of attention. In addition, conventional methods of giving commands to the crane by the operator generally require continuous use of both hands. The operator is therefore restricted in performing other operations simultaneously while commanding the crane movement.

Therefore, the need to at least partially automate crane movement appears to be particularly strong, so as to simplify operator control and thus reduce the risk of human error, which could result in damage to property and people.

For example, EP 3 556 711 A1 describes a system for automatically moving an articulated arm, particularly an articulated crane, to a target position. The system comprises an emitter probe positioned at the target position, and at least one first, one second, one third, and one fourth detector probe, each positioned at a predetermined and different location on the articulated arm and suitable for communicating with the emitter probe such that each emitter probe-detector probe pair provides a signal representative of their relative distance. The system also comprises a control unit configured to estimate on the basis of signals from the first, second, third, and fourth emitter probes and the detector probe the current absolute position of the emitter probe and to actuate the actuators of the articulated crane so that the end-effector moves closer to the estimated current absolute position of the emitter probe.

EP 4 139 241 A1 describes a crane having a computer control unit and an optical crane measurement unit that generates an optically recognizable beam of light, wherein said optical measurement unit determines the distance of reference points for crane movement, including possible obstacles, so that their coordinates can be mathematically determined.

### Summary of the invention

It is therefore an object of the present invention to provide a system for the automatic or semi-automatic movement of an articulated arm, in particular an articulated crane, which is simple and intuitive to use, an alternative to the systems according to the known art, and which assists the operator by limiting his efforts and consequent stress and possibly allowing him to perform other activities at the same time as moving the crane.

This and other objects are achieved by a system for automatic or semi-automatic movement of an articulated arm according to claim 1.

The dependent claims define possible advantageous embodiments of the invention.

### Brief description of the drawings

In order to better understand the invention and appreciate its advantages, some non-limiting exemplary embodiments of the invention will be described below, referring to the appended figures, in which:
figure 1 is a schematic illustration of a system for automatic or semi-automatic movement of an articulated crane according to an embodiment;
figure 2 is a schematic illustration of a system for automatic or semi-automatic movement of an articulated arm according to an embodiment;
Figure 3a is a schematic illustration of a system for automatic or semi-automatic movement of an articulated arm according to a further embodiment;
Figure 3b is a schematic illustration of a system for automatic or semi-automatic movement of an articulated arm according to a further embodiment;
figure 3c is a schematic illustration of a system for automatic or semi-automatic movement of an articulated arm according to a further embodiment;
figure 3d is a schematic illustration of a system for automatic or semi-automatic movement of an articulated arm according to a further embodiment;
figure 4a is a schematic illustration of a system for automatic or semi-automatic movement of an articulated arm according to a further embodiment;
figure 4b is a schematic illustration of a system for automatic or semi-automatic movement of an articulated arm according to a further embodiment;
Figure 5a is a schematic illustration of a system for automatic or semi-automatic movement of an articulated arm according to a further embodiment;
Figure 5b is a schematic illustration of a system for automatic or semi-automatic movement of an articulated arm according to a further embodiment.

### Detailed description of the invention

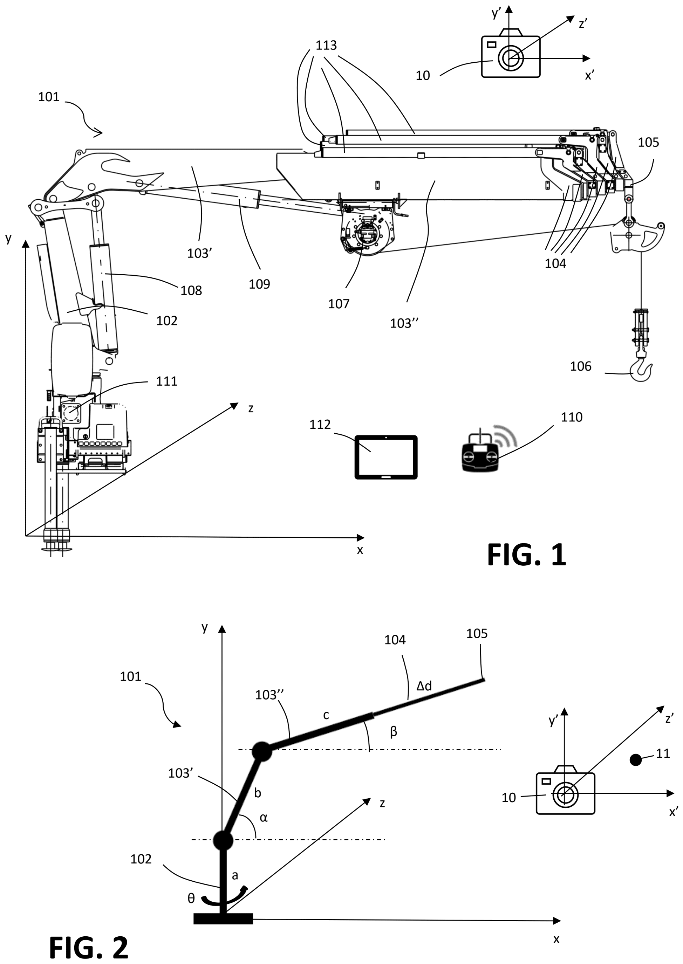

With reference to the attached Figure 1, it shows an example of a possible articulated arm, specifically an articulated crane, e.g., a hydraulic loader crane, shown as a whole as 101. For example, loader crane 101 can be positioned and moved on a truck (not shown in Figure 1).

Crane 101 comprises a column 102 rotatable about its own axis, and one or more, possibly extendable, arms 103', 103". The extensibility of the arms, where provided, is achieved by a plurality of movable extensions 104 in translation relative to each other, so that the axial extension of the respective arm can be changed. In the example in Figure 1, only the second arm 103" is extendable by movement of the extensions 104. In the following description, the first arm 103', lacking the extensions, will be referred to as the "main arm," while the second arm 103", provided with the extensions 104, will be referred to as the "secondary arm." The main arm 103' is rotatable with respect to column 102, while the secondary arm 103" is rotatable with respect to the main arm 103'. According to further variants not shown, the main arm 103' can also be optionally extendable and for this purpose include a plurality of extensions. In addition, crane 101 may optionally include additional auxiliary arms following secondary arm 103", with or without extensions. In such a case, the end-effector 105 will be positioned at the end of the last auxiliary arm of the kinematic chain.

The free end 105 of the last extension arm of secondary arm 103" is commonly referred to as the end-effector. A hook 106 may be provided at the end-effector 105, which can be handled, for example, by a rope winch 107.

Crane 101 comprises a plurality of actuators to move the bodies that form its kinematic chain. Referring to Figure 1, a first hydraulic jack 108, which moves the main arm 103' relative to the column 102, a second hydraulic jack 109, which moves the secondary arm 103" relative to the main arm 103', and an actuator 111 for moving the column 102 relative to a fixed base (e.g., the truck not shown on which crane 101 is positioned) are shown. There will then be additional actuators 113, e.g., hydraulic, for moving the extensions 104. Of course, although in cranes the actuators are normally hydraulic, actuators of a different nature (e.g., electric or pneumatic) can generally be provided in articulated arms.

The crane 101 comprises a plurality of sensors such that absolute coordinates of the end-effector 105, in particular its Cartesian coordinates, can be determined with respect to a fixed first x, y, z reference system, as the crane is in a fixed position during the movement of its end-effector (e.g., the crane 101 is positioned on a truck for its transport, which is positioned in a fixed position when the crane is to operate). For example, the origin of the first reference system x, y, z, may be coincident with the base of column 102, and the absolute coordinates of end-effector 105 may be expressed as a tern of values with respect to the tern of Cartesian axes x, y, z.

According to a possible embodiment, with reference to crane 101, the plurality of sensors may include, for example:
- an angular sensor for measuring the rotation of the column 102 around its axis, relative to a fixed reference;
- an angular sensor for measuring the rotation of the main arm 103'. This rotation can be absolute, that is, referred to a fixed reference such as the horizontal, or it can be relative, with respect to column 102;
- an angular sensor for measuring the rotation of the secondary arm 103". This rotation can be absolute, that is, referred to a fixed reference such as the horizontal, or it can be relative, with respect to the main arm 103';
- a linear sensor for measuring the translation of the extension 104 relative to the secondary arm 103".

For example, sensors may include linear or angle encoders, magnetostrictive sensors, or the like. From the signals from the above sensors it is possible, by means of geometric relations, to determine the coordinates of the end-effector 105 with respect to the first reference system x, y, z, as will be shown in more detail later.

Crane 101 comprises a control unit functionally connected to actuators, for their movement, and to sensors, to receive signals representative of the quantities listed above. There is also a control device 110, itself having a control unit, connected to the crane control unit to allow an operator to manually move the crane and possibly access other functions. For example, the control device 110 may comprise a radio control and the crane control unit may comprise a transmission module to communicate with the latter (e.g., a radio transmission module). By means of the radio control, acting on a joystick, for example, the operator can visually move the end-effector 105 between successive positions.

Since, in the case of an articulated crane, the same position of the end-effector 105 can generally correspond to more than one configuration of the crane itself, the movements of the end-effector 105 can be performed in different manners, that is, by moving different actuators in sequence. Therefore, predefined operating logics are generally provided whereby, given a certain desired movement of the end-effector, it is chosen which actuators are to be operated. The crane control unit is then configured in such a way that, following an instruction to move the end-effector to a certain absolute coordinate, such movement is achieved according to a predetermined actuator activation logic. For example, one activation logic may be to minimize the flow rate of oil required to drive the actuators, or to minimize the hydraulic energy consumed. A further logic may be the minimum distance travelled by the end-effector to reach the desired position. An additional criterion often used, for example in combination with one of those listed above, is to keep the actuators away from the end position. The predetermined operating logics are known per se, and therefore we will not go into the details of their description.

By means of a so configured system, it is possible to impose on end-effector 105 a sequence of movements passing through successive points identified by absolute coordinates, e.g., Cartesian, with respect to the first reference system x, y, z. Alternatively, the operator can disjointly control the respective crane actuators to visually achieve the desired end-effector positioning: in this second case, the crane control unit is still able to determine the coordinates of end-effector 105 with respect to the first x, y, z reference system thanks to the above-mentioned crane 101 sensors.

Associated with the crane is a vision system 10 capable of acquiring images of the surrounding workspace in which the crane 101 operates and determining coordinates of one or more reference points in the workspace with respect to itself. Specifically, the vision system 10 is capable of determining, in a manner known by itself, the coordinates, e.g., Cartesian, of such reference points in the workspace within its field of view with respect to a second reference system x', y', z' integral with the vision system 10. The vision system 10 may, for example, comprise a camera (or, more generally, an optical sensor or a group of optical sensors), controlled by a management software loaded into a control unit, capable of determining the coordinates of reference points with respect to the reference system x', y', z'. The camera or optical sensor or group of optical sensors may itself comprise its own control unit with associated management software, or it may be connected to external devices, such as a PC on which suitable management software is loaded. Note that reference points may comprise physical reference elements present in the workspace, which are displayed by the vision system 10 in its field of view, and/or virtual reference points that can be entered by the operator as input parameters in the workspace images provided by the vision system 10, for example, via the control device 110 or via an additional user interface device 112 (such as a tablet, smartphone or PC, local or remote, or a user panel) in addition to the control device 110, as will be clarified in more detail below. In both cases, the vision system 10 can determine the coordinates of virtual reference points in the acquired workspace images with respect to the second reference system x', y', z'. The reference points can also comprise a combination of physical reference elements and virtual reference points. It should also be noted that the virtual reference points may be entered by the operator by drawing one or more points on the workspace images (for this purpose, the command device 100 and/or the user interface device 112 may comprise a touch screen), or they may be entered in terms of coordinates, with respect to the first reference system x, y, z, or with respect to the second reference system x', y', z', preferably always by means of the command device 100 and/or the user interface device 112.

Vision system 10, e.g., the camera, can be associated with the crane itself, or, alternatively, be associated with a mobile device (not shown in the figures), such as a ground vehicle or a flying vehicle such as a drone, so that the spatial position of vision system 10 with respect to crane 101 can be changed as needed.

Vision system 10, at the time of workspace image acquisition, is positioned at a known position relative to the crane, specifically relative to the first reference system x, y, z. Such a known position may be fixed (e.g., the vision system 10 may be positioned on a fixed portion of the crane) or variable, as long as it is known at the time of workspace image acquisition (e.g., the vision system 10 may be positioned on the previously mentioned ground or flying vehicle, or on a movable portion of the crane whose coordinates with respect to the reference system x, y, z can be obtained through the crane's own sensors).

Since vision system 10 is able to determine the coordinates of reference points in the workspace with respect to itself, i.e., with respect to the second reference system x', y', z', and since the position of vision system 10 with respect to crane 101, i.e., the coordinates of the origin of the second reference system x', y', z' with respect to the first reference system x, y, z, is known, it is possible, with simple geometric relations, to determine the coordinates with respect to the first reference system x, y, z, of any reference point, physical or virtual, in the workspace. On the other hand, since the coordinates of end-effector 105 are determined with respect to the x, y, z reference system, it is possible to relate or constrain the movements of end-effector 105 to any reference point in the workspace. Conversion of the coordinates of the reference points from the second reference system x', y', z' to coordinates with respect to the first reference system x, y, z, and movement of the end-effector 105, whose coordinates with respect to the first reference system x, y, z are known and can be imposed at any instant, can, for example, be done by the crane control unit. Note that, alternatively, additional and different control units can be provided that can separately perform the above functions. By way of example, coordinate conversion may alternatively be performed by a vision system control unit 10, or by a control unit of the control device 110, or by a control unit of the user interface device 112. In that case, the different control units are configured to communicate with each other.

**To** better understand the above, refer to Figure 2. In it, an articulated arm 101 is schematized, with a column 102 (schematized for simplicity in the example as perfectly vertical, although in reality it may have some angle of inclination with respect to the vertical) of length a, a main arm 103' of length b and pivoting with respect to column 102, and a secondary arm 103" pivoting with respect to the main arm 103' and of length c, wherein the secondary arm 103" also comprises one or more extensions 104 that may extend out by a variable amount Δd with respect to the secondary arm 103". The sensors of the articulated arm 101 comprise a sensor for measuring the angle α between the main arm 103' and the horizontal, a sensor for measuring the angle β between the secondary arm 103" and the horizontal, and a sensor for measuring the linear movement Δd of the extensions 104 relative to the secondary arm 103". A column rotation sensor 102, capable of detecting an angle θ with respect to a fixed reference, such as the base of the articulated arm, is also provided. It should be noted in each case that, as mentioned above, the main arm 103' can optionally in turn be extensible by means of extensions, and additional auxiliary arms, extensible or not, subsequent to the secondary arm 103" can also be provided.

Assuming, as an example, that the origin of the Cartesian triplet x, y, z of the first reference system is arranged at the base of column 102, the absolute coordinates of the end-effector 105, which depend on the configuration of the articulated arm, can be obtained by the following relations, which can be detected from measurements from the above-mentioned angular and relative linear sensors:$x = \left[b⋅cosα+ \left(c + Δd\right)⋅cosβ\right] ⋅ cosθ$$y = a + b ⋅ sinα + \left(c + Δd\right) ⋅ sinβ$$z = \left[b⋅cosα+ \left(c + Δd\right)⋅cosβ\right] ⋅ sinθ$

As for vision system 10, it is at a known position relative to the first reference system x, y, z. For example, the origin of the second reference system x',y',z', integral to vision system 10, will have coordinates, known, with respect to the first reference system x, y, z, given by: $x , y , {z}_{ref gru} = \left[\begin{matrix}{X}_{camera ref gru} \\ {Y}_{camera ref gru} \\ {Z}_{camera ref gru}\end{matrix}\right]$

**Any** reference point 11 in the workspace that is viewed by vision system 10 will have coordinates, with respect to the second reference system x',y',z', given by: $x ′ , y ′ , z {′}_{ref camera} = \left[\begin{matrix}X {′}_{pto 11 ref camera} \\ Y {′}_{pto 11 ref camera} \\ Z {′}_{pto 11 ref camera}\end{matrix}\right]$ Therefore, the coordinates of reference point 11 with respect to the first reference system x, y, z will be given by: $x , y , {z}_{ref gru} = \left[\begin{matrix} & & & {X}_{camera ref gru} \\ & {R}_{gru - camera} & & {Y}_{camera ref gru} \\ & & & {Z}_{camera ref gru} \\ 1 & 1 & 1 & 1\end{matrix}\right] ⋅ \left[\begin{matrix}X {′}_{pto 11 ref camera} \\ Y {′}_{pto 11 ref camera} \\ Z {′}_{pto 11 ref camera} \\ 1\end{matrix}\right]$ wherein *R_{gru-camera}* is the rotation matrix between the x, y, z triplet and the x', y', z' triplet.

Once both the coordinates of end-effector 105 and the coordinates of reference points 11 are referenced to the first reference system x, y, z, it is possible to command end-effector 105, either automatically or semiautomatically, according to the coordinates of reference points 11, which can represent, for example, constraints and/or targets for the movement of the end-effector.

Note that the reference points, physical or virtual, can be single or multiple, so as to define trajectories, surfaces or volumes.

The following are some possible examples of automatic or semi-automatic crane movement that takes advantage of the above.

### Movement within allowed volumes/outside of inhibited volumes

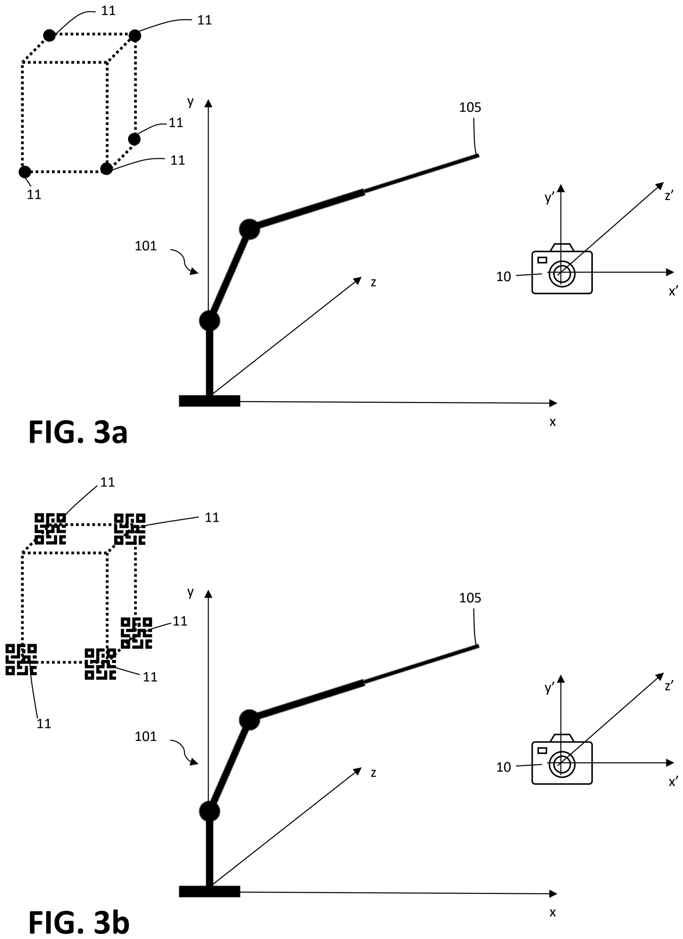

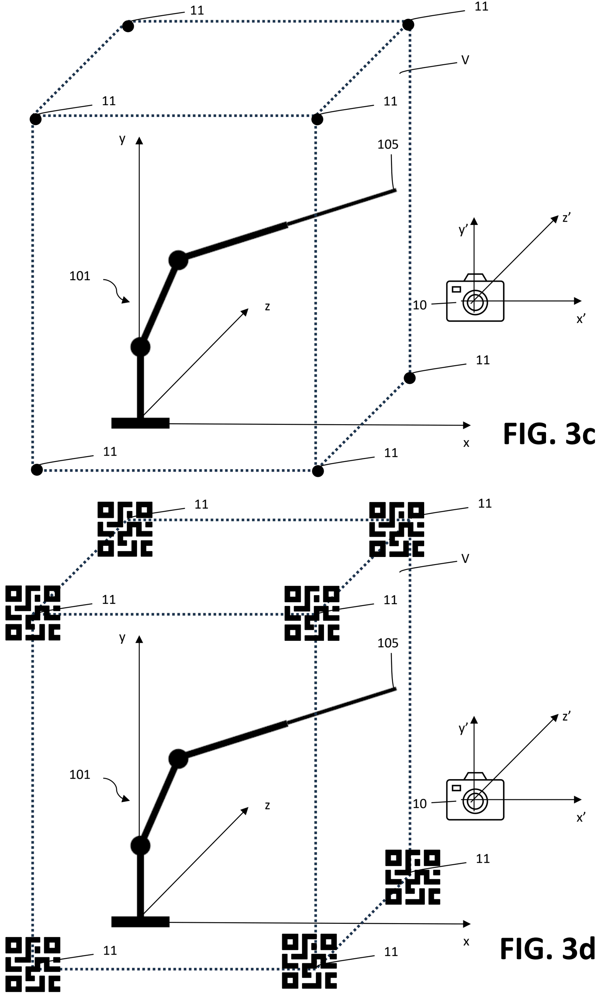

According to one embodiment, the reference points 11 in the workspace are multiple and are such as to define a reference volume V in the workspace detected by the vision system 10. Such a reference volume can be a volume inhibited to the movement of the crane 101, i.e., a volume within which the crane must never enter (Figures 3a and 3b), or a volume allowed to the movement of the crane, i.e., a volume outside of which the crane must never leave (Figures 3c and 3d). Such reference volumes may be allowed/inhibited to the end-effector 105 alone, or to the entire crane 101 or portions thereof (whose coordinates can be determined).

In these embodiments, the vision system 10 acquires one or more images of the workspace (e.g., if the vision system 10 is placed on a drone, it acquires one or more images of the workspace taken from above). The operator fixes virtual reference points 11 such that the allowed (Figure 3c)/inhibited (Figure 3a) volume is identified on these images. This operation can be carried out, for example, on the control device 110, which receives the images from the vision system 10 and which for this purpose can be provided with a screen such as a touchscreen, on which the operator can locate the aforementioned virtual reference points directly on the displayed image. Alternatively, the images from the vision system 10 can be provided on the user interface device 112, such as a tablet, a smartphone or a local or remote PC, or a user panel, additional to the control device 110. Vision system 10 determines the coordinates of these points with respect to the second reference system x', y', z', from which the coordinates with respect to the first reference system x, y, z can be determined. If these virtual reference points locate a volume, the control unit will command the crane so that the end effector 105, the entire crane, or a portion of it (whose coordinates with respect to the first reference system x, y, z are known at all times through the crane's sensors), either never leaves (allowed volumes) or always stays outside (inhibited volumes) of these volumes. In these embodiments, crane movement can be semi-automatic in the sense that the operator can manually control the crane as long as the end effector 105, the entire crane, or a portion of it does not exit the permitted volume/enter the inhibited volume. When such a circumstance occurs, the control unit can, for example, stop the movement of the crane, or automatically change its trajectory so that volume constraints are met.

According to a further possible variant, the allowed (Figure 3d) and inhibited (Figure 3b) reference volumes can be totally or partially defined by a plurality of physical reference markers appropriately placed in the workspace, which identify reference points 11. These physical markers are detected by the vision system 10, which determines their coordinates with respect to the second reference system x', y', z', from which the absolute coordinates with respect to the first reference system x, y, z can be determined. The reference volumes can be totally or partially defined by the physical markers. In the case where the physical markers only partially define the inhibited/allowed volumes (e.g., in the case of workspace images taken from above and therefore two-dimensional), the operator can provide the missing parameters (e.g., the height of the volume, or one or more additional virtual reference points in space) via the user interface device 112 or via the command device 110.

Note that the allowed/inhibited reference volumes can be set with a certain tolerance, so that safety gaps can be defined with respect to them. For example, the tolerance can be set and/or changed via the user interface device 112.

### Reaching a target position

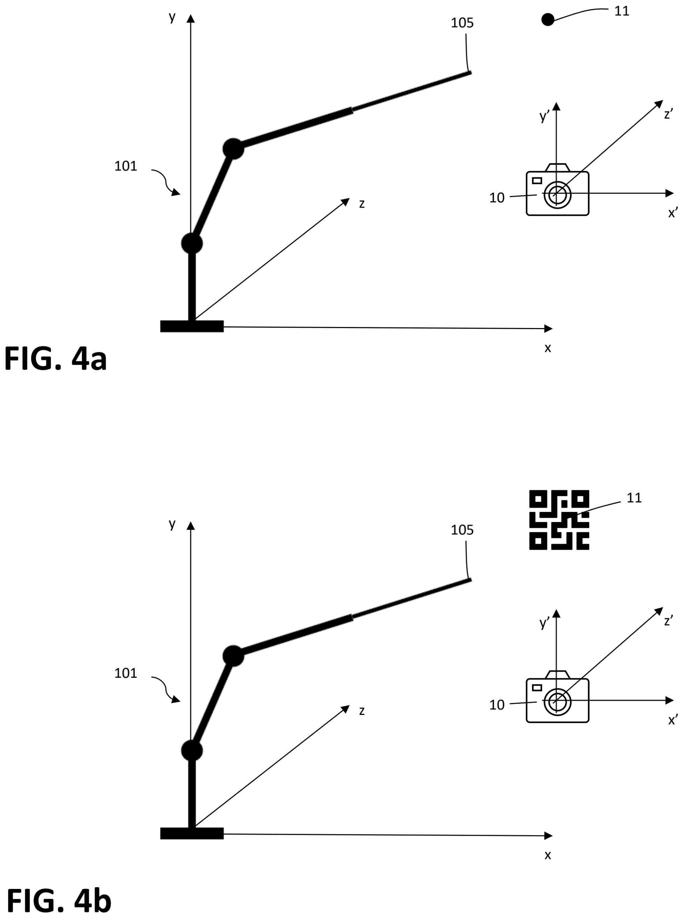

According to one embodiment, the reference point 11 in the workspace is single and defines a target position to be reached by the end-effector 105 (Figures 4a and 4b).

In one variant, the vision system 10 acquires one or more images of the workspace and the operator fixes on these images the single virtual reference point 11 corresponding to the target position (Figure 4a). This operation can be performed, for example, on the user interface device 110 or on the second user interface device 112, according to what has already been mentioned in relation to inhibited/allowed volumes. The vision system 10 determines the coordinates of this single virtual reference point 11 with respect to the second reference system x', y', z', from which the coordinates with respect to the first reference system x, y, z of the target position to be reached by the end-effector 105 can be determined in the manner described above. The control unit will then command the end-effector 105 to automatically reach that target position and stop when that circumstance occurs.

According to a further variant, the single reference point 11 in the workspace is identified by a physical reference marker, which is detected by vision system 10, wherein this reference marker defines the target position to be reached by end-effector 105 (Figure 4b). Vision system 10 determines the coordinates of the displayed physical reference marker with respect to the second reference system x', y', z', from which it is possible to determine the absolute coordinates with respect to the first reference system x, y, z of the target position to be reached by end-effector 105. It will then be possible to set the crane control unit so that the end-effector 105 automatically reaches that target position and stops when that circumstance occurs. According to this variant, while this is possible, it is not strictly necessary for the vision system 10 to transmit images of the workspace to the user interface device 112 or the control device 110, since crane movement is fully automatic and therefore no further operator intervention is required.

Note that target positions can be more than one, defined successively all by virtual reference points, or all by physical markers, or by a combination of virtual reference points and physical markers.

The reference points can possibly be stored and retrieved later via, for example, the user interface device112.

**The** physical reference marker can be either fixed or moving, and, in the latter case, the control unit will update the target position as the coordinates of the reference marker change as detected by the vision system. For example, the reference marker may be placed on a load to be handled (usually in a fixed position), or on an operator, who may remain in a fixed position or may move over time in the workspace.

According to one embodiment, multiple physical markers can be provided in the workspace, and the reference marker can be changed during crane movement. For example, in a first stage, the reference marker may be applied to an operator (so that the end-effector follows the operator), who approaches a load to be lifted that is in turn provided with a second reference marker. When the operator arrives at a certain distance from the load, if he selects (e.g., on the control device 110 or the user interface device 112) the second marker as the current reference marker, the end-effector 105 will cease to chase the operator and will continue its movement approaching the load to be lifted. In this case, crane movement is semi-automatic since the operator intervenes during movement to change the reference marker.

According to one embodiment, reference markers are associated with a priority level. Thus, if the vision system 10 detects the presence of multiple physical markers in the workspace, the control unit will command the crane for the end-effector 105 to approach the physical marker with the highest priority. According to one variant, the priority level of the markers can be set and changed manually, for example, by acting on the control device 110 or the user interface device 112, so that from time to time the user can manually choose which physical marker corresponds to the target position to be reached by the end-effector 105.

**Preferably,** the crane control unit moves the actuators in such a way that the end-effector 105 reaches the target position according to a substantially straight trajectory. Where the actuators are oil-hydraulic, even more preferably, the movement strategy is one that minimizes the flow rate of oil to the actuators required for movement, or the hydraulic energy consumed.

**Preferably,** the crane control unit moves the actuators in such a way that the end-effector 105 moves according to a predefined law of motion, which may possibly be set by the operator, such as by means of the user interface device 112 or the control device 110. For example, it can be provided that the end-effector 105 moves according to a velocity ramp, i.e., in such a way that it gradually accelerates at the beginning of motion, reaches a roughly constant velocity, and gradually slows down near the target position.

According to one possible embodiment, the crane control unit moves the actuators in such a way that the end-effector 105 moves to a position near, but at a distance from, the target position. This prevents the end-effector 105 from, for example, colliding with the operator on which the target marker is placed, especially in the case where the operator stands still. The distance from the target position may be different depending on the reference marker. For example, in the case of reference marker associated with an operator, a greater distance can be set than in the case of reference marker associated with a load.

Note that physical markers, either for the definition of a target position or for the definition of allowed/inhibited reference volumes described above, may include labels or signs bearing numeric or alphanumeric strings, barcodes, QR codes, ArUco markers, images, or the like.

### Movements according to a preset trajectory relative to a reference position

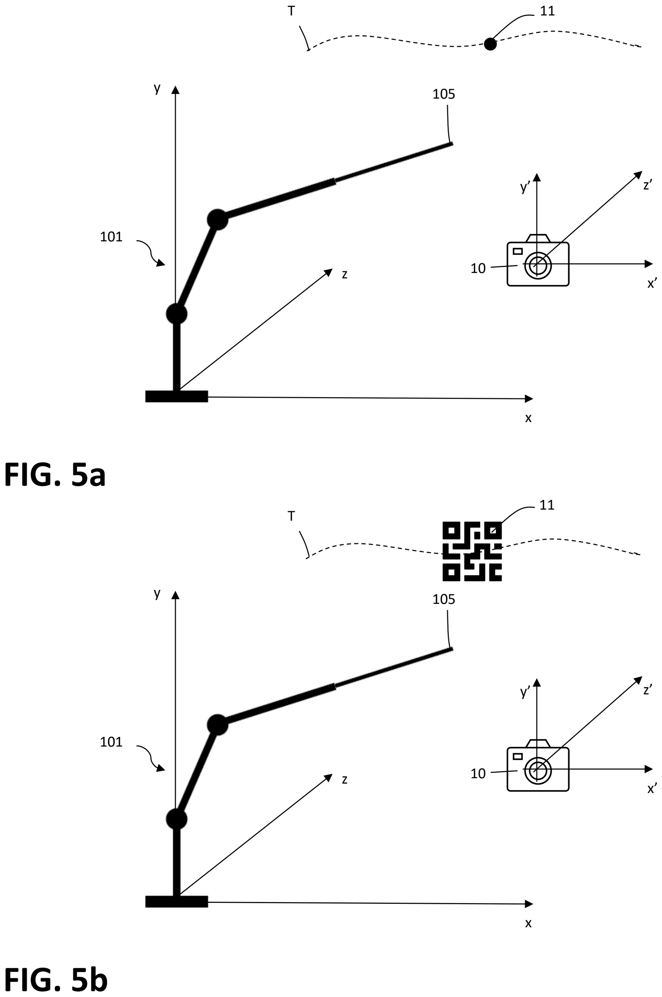

According to one embodiment, the control unit commands the end-effector 105 to make a movement according to a predetermined trajectory T with respect to a reference point 11 (Figures 5a and 5b), wherein the reference point can be identified in the same way as described above with reference to the target position. Thus, reference point 11 can be a virtual reference point (Figure 5a) or it can be identified by a physical marker present in the workspace (Figure 5b).

In this way, the same trajectory of the 105 end-effector can be repeated with respect to different points, for example, by simply moving the physical reference marker in the workspace.

**The** predetermined trajectory T can be recorded according to different modes.

According to a first mode, given a reference point, virtual or physical, in the workspace, the operator manually moves the crane and the positions subsequently assumed by the end-effector are sampled and stored.

According to a further mode, given a reference point, virtual or physical, in the workspace, subsequent points in the trajectory can be identified in the manner said above for target points, by virtual reference points and/or physical markers.

In either case, by then moving the reference point, the crane will be able to move automatically, repeating the predefined trajectory, but with respect to the new reference point.

Note that it is possible to store one or more predetermined trajectories T and recall them, for example, via the user interface device.

### Combination of functions

According to further embodiments, the previously described criteria can be adopted in combination. For example, it is possible to set the control unit so that the end-effector 105 reaches a target position, or so that it follows a predetermined trajectory relative to a target position, keeping within an allowed volume or outside an inhibited volume.

It should be noted that the automatic or semi-automatic movement system according to the invention allows for the movement of the crane and its end-effector either on-site (i.e., with the operator in close proximity to the crane) or remotely (i.e., from a control center remote from the crane workspace). In fact, the presence of the vision 10 system also allows an operator operating remotely to have all the information needed to safely handle the crane even from a distance.

It should also be noted that, in this description and the appended claims, the control units, as well as the elements indicated by the term "module," may be implemented by means of hardware devices (e.g., control units), by means of software, or by means of a combination of hardware and software.

**To** the described embodiments of the system for the automatic or semi-automatic movement of an articulated arm, in particular an articulated crane, the skilled person, in order to meet specific contingent needs, may make numerous additions, modifications, or substitutions of elements with functionally equivalent ones, without, however, departing from the scope of the appended claims.

## Claims

1. System for the automatic or semi-automatic movement of an articulated arm (101) in a workspace, comprising:
- said articulated arm (101), comprising an articulated crane comprising a plurality of bodies connected in succession to form an open kinematic chain with an end-effector (105), having a plurality of degrees of translational and/or rotational freedom and a plurality of actuators for the movement of said bodies;
- a plurality of sensors associated with said bodies, suitable to supply signals representative of linear or angular positions such as to allow the determination of coordinates of the end-effector (105) with respect to a fixed first reference system (x, y, z);
- a command device (110) configured for the control of the movements of the articulated arm (101) by an operator;
- a vision system (10), arranged in a predefined position with respect to the first reference system (x, y, z) and capable of acquiring images of the workspace and of determining coordinates of one or more reference points in the workspace with respect to a second reference system (x', y', z'), integral with the vision system (10), wherein said one or more reference points correspond to physical reference elements positioned in the workspace and viewable by the vision system (10), and/or to virtual reference points entered as input parameters in the images of the workspace acquired by the vision system (10) by means of a user interface device (112);
- at least one control unit operatively connected to said actuators, sensors, vision system (10), command device (110) and user interface device (112), configured to:
• determine the coordinates of the one or more reference points in the workspace with respect to the first reference system (x, y, z);
• automatically control the movements of the end-effector (105) or modify the movements of the end-effector (105) controlled by the command device (110) as a function of said coordinates of the one or more reference points in the workspace with respect to the first reference system (x, y, z).

2. System according to claim 1, wherein said vision system (10) is configured to acquire one or more images of the workspace and to transmit them to the command device (110) and/or to the user interface device (112), wherein said command device (110) and/or said user interface device (112) is configured to receive, as input from the operator, a plurality of said virtual reference points on said one or more images of the workspace transmitted by the vision system (10), wherein said plurality of virtual reference points defines a reference volume inhibited to the articulated arm (101), wherein said at least one control unit is configured to control the articulated arm (101) such that the end-effector (105), the entire articulated arm (101) or a portion thereof remain outside said inhibited reference volume.

3. System according to claim 1 or 2, wherein said vision system (10) is configured to acquire one or more images of the workspace and to transmit them to the command device (110) and/or to the user interface device (112), wherein said command device (110) and/or said user interface device (112) is configured to receive, as input from the operator, a plurality of said virtual reference points on said one or more images of the workspace transmitted by the vision system (10), wherein said plurality of virtual reference points defines a reference volume allowed to the articulated arm (101), wherein said at least one control unit is configured to control the articulated arm (101) such that the end-effector (105), the entire articulated arm (101) or a portion thereof remain within said allowed reference volume.

4. System according to any of the preceding claims, further comprising a plurality of physical markers as physical reference elements for said reference points in the workspace, wherein said vision system (10) is configured to acquire one or more images of the workspace containing the physical markers, wherein said plurality of physical markers at least partially defines a reference volume inhibited to the articulated arm (101), wherein said at least one control unit is configured to control the articulated arm (101) such that the end-effector (105), the entire articulated arm (101) or a portion thereof remain outside said inhibited reference volume.

5. System according to any of the preceding claims, further comprising a plurality of physical markers as physical reference elements for said reference points in the workspace, wherein said vision system (10) is configured to acquire one or more images of the workspace containing the physical markers, wherein said plurality of physical markers at least partially define a reference volume allowed to the articulated arm (101), wherein said at least one control unit is configured to control the articulated arm (101) such that the end-effector (105), the entire articulated arm (101) or a portion thereof remain within said allowed reference volume.

6. System according to claim 4 or 5, wherein said plurality of physical markers partially define the allowed/inhibited reference volume and said command device (110) and/or said user interface device (112) is configured to receive as input from the operator the height of said inhibited/permitted reference volume and/or one or more additional virtual reference points such as to completely define the inhibited/permitted reference volume.

7. System according to any one of claims 2 to 6, wherein said at least one control unit is configured to stop or to modify the trajectory of the articulated arm (101) if, following commands from the command device (110), the end-effector (105) or the entire articulated arm (101) or a portion thereof enters the inhibited reference volume/exits the allowed reference volume.

8. System according to any of the preceding claims, wherein said vision system (10) is configured to acquire one or more images of the workspace and to transmit them to the command device (110) and/or to the user interface device (112), wherein said command device (110) and/or said user interface device (112) is configured to receive, as input from the operator, a single virtual reference point on said one or more images of the workspace transmitted by the vision system (10), wherein said at least one control unit is configured to control the articulated arm (101) such that the end-effector (105) automatically reaches a target position corresponding to said single virtual reference point in the workspace.

9. System according to any of the preceding claims, further comprising a physical marker as a physical reference element for one of said reference points in the workspace, wherein said vision system (10) is configured to acquire one or more images of the workspace containing the physical marker, wherein said at least one control unit is configured to control the articulated arm (101) such that the end-effector (105) automatically reaches a target position corresponding to said single reference point identified by the physical marker in the workspace.

10. System according to any of the preceding claims, further comprising a plurality of physical markers as physical reference elements for said reference points in the workspace, wherein said vision system (10) is configured to acquire one or more images of the workspace containing the plurality of physical markers, wherein said command device (110) and/or said user interface device (112) is configured to receive as input from the operator a selection of a single physical marker from said plurality of physical markers, wherein said at least one control unit is configured to control the articulated arm such that the end-effector (105) automatically reaches a target position corresponding to the single reference point identified by the single physical marker selected in the workspace.

11. System according to any of the preceding claims, further comprising a plurality of physical markers having different priority levels as physical reference elements for said reference points in the workspace, wherein said vision system (10) is configured to acquire one or more images of the workspace containing the plurality of physical markers, wherein said at least one control unit is configured to control the articulated arm (101) such that the end-effector (105) automatically reaches a target position corresponding to the single reference point identified by the physical marker with highest priority in the workspace.

12. System according to the preceding claim, wherein the priority levels of said physical markers are modifiable by the operator through the command device (110) and/or the user interface device (112).

13. System according to any of claims 8 to 12, wherein the at least one control unit is configured to control the end-effector (105) such that it automatically moves to a position near and at a distance from the target position.

14. System according to any of the preceding claims, wherein said vision system (10) is configured to acquire one or more images of the workspace and to transmit them to the command device (110) and/or to the user interface device (112), wherein said command device (110) and/or said user interface device (112) is configured to receive, as input from the operator, a single virtual reference point on said one or more images of the workspace transmitted by the vision system (10), wherein said at least one control unit is configured to control the articulated arm (101) such that the end-effector (105) automatically follows a preset trajectory with respect to said single virtual reference point in the workspace.

15. System according to any of the preceding claims, further comprising a physical marker as a physical reference element for one of said reference points in the workspace, wherein said vision system (10) is configured to acquire one or more images of the workspace containing the physical marker, wherein said at least one control unit is configured to control the articulated arm (101) such that the end-effector (105) automatically follows a preset trajectory with respect to said single reference point identified by the physical marker in the workspace.

16. System according to any of the preceding claims, wherein the vision system (10) includes a camera.

17. System according to any of the preceding claims, wherein the vision system (10) is arranged on the articulated arm (101) or on a land vehicle or on a flying vehicle.

18. System according to any of claims 1 to 17, wherein the user interface device (112) comprises a tablet, or a smartphone, or a local or remote PC, or a user panel and is distinct from the command device (110).

19. System according to any of claims 1 to 17, wherein the command device (110) is a radio command that includes the user interface device (112).
